# EUROPÄISCHE PATENTSCHRIFT

(11) **EP 2 496 799 B1**
(45) Veröffentlichungstag und Bekanntmachung des Hinweises auf die Patenterteilung: **01.01.2014**
(21) Anmeldenummer: 10775796.5
(22) Anmeldetag: 02.11.2010
(51) Int. Cl.: F01K 17/02, F01K 13/00, F01D 13/02, F22B 37/00, F01K 23/10

(54) **VERFAHREN ZUM NACHRÜSTEN EINER FOSSIL BEFEUERTEN KRAFTWERKSANLAGE MIT EINER KOHLENDIOXID-ABSCHEIDEVORRICHTUNG**
METHOD FOR RETROFITTING A FOSSIL-FUELED POWER STATION WITH A CARBON DIOXIDE SEPARATION DEVICE
PROCÉDÉ D'ÉQUIPEMENT ULTÉRIEUR D'UNE CENTRALE ÉLECTRIQUE À COMBUSTIBLE FOSSILE AVEC UN DISPOSITIF DE SÉPARATION DE DIOXYDE DE CARBONE

(30) Priorität: 02.11.2009 DE 102009051607
(43) Veröffentlichungstag der Anmeldung: 12.09.2012
(73) Patentinhaber: Siemens Aktiengesellschaft, 80333 München (DE)
(72) Erfinder: GRUMANN, Ulrich, 91056 Erlangen (DE); MUCH, Ulrich, 91056 Erlangen (DE); PICKARD, Andreas, 91325 Adelsdorf (DE); ROST, Mike, 91058 Erlangen (DE)
(86) Internationale Anmeldenummer: PCT/EP2010/066617
(87) Internationale Veröffentlichungsnummer: WO 2011/051493

(56) Entgegenhaltungen:
- EP-A1- 1 473 072
- WO-A1-2008/023046
- US-A- 4 042 809

## Beschreibung

Die Erfindung bezieht sich auf ein Verfahren zum Nachrüsten einer fossil befeuerten Kraftwerksanlage mit einer Kohlendioxid-Abscheidevorrichtung.

Für die Abscheidung von Kohlendioxid aus Abgasen von fossil befeuerten Kraftwerksanlagen, wie beispielsweise Gas- und Dampfkraftwerksanlagen (GUD) oder Kohle befeuerten Dampfkraftanlagen (DKW), ist eine große Menge an Energie erforderlich.

Bei Einsatz eines nasschemischen Absorbtions-Desorptionsverfahrens zur Abscheidung von Kohlendioxid muss diese Energie in Form von thermischer Energie zur Beheizung des Desorptionsprozesses aufgebracht werden. Üblicherweise wird dazu Niederdruckdampf aus dem Wasserdampfkreislauf der Kraftwerksanlage verwendet.

Selbst wenn eine im Bau befindliche Kraftwerksanlage noch nicht mit einer an ihr angeschlossenen Kohlendioxid-Abscheidevorrichtung (CO2 Capture Plant) ausgestattet wird, besteht schon heute die Nachweispflicht der späteren Nachrüstbarkeit (Capture Readyness). Dementsprechend werden bereits heute entsprechende Vorkehrungen getroffen, sodass eine Kohlendioxid-Abscheidevorrichtung zu einem späteren Zeitpunkt problemlos in die Kraftwerksanlage integriert werden kann. Ein solches Verfahren zeigt das Dokument WO2008/023046 A1.

Zudem besteht die Erfordernis, dass die Dampfturbine bzw. der Kraftwerksprozess für die Entnahme von Niederdruckdampf entsprechen konfiguriert sein muss. Bei Dampfturbinen mit getrenntem Gehäuse für die Mittel- und Niederdruckstufe ist die Entnahme von Niederdruckdampf an der Überströmleitung auf einfache weise möglich. Jedoch führt die Entnahmelösung an der Überströmleitung dazu, dass im Entnahmefall die Niederdruckstufe der Dampfturbine gedrosselt betrieben werden muss, da die Schluckfähigkeit der Niederdruckstufe dimensioniert ist für den Betrieb ohne Niederdruckdampfentnahme. Ohne Drosselung würde dies bei Entnahme von Niederdruckdampf zu einem zu großen Druckabfall im Niederdruckteil führen. Auch die Drosselung der Maschine stellt thermodynamisch eine suboptimale Lösung dar.

Die Entnahme von Dampf aus anderen Quellen innerhalb des Kraftwerksprozesses ist auch nicht empfehlenswert, oder auf geeignete Weise möglich. So führt beispielsweise eine Entnahme aus einer Zwischenüberhitzungsleitung der Dampfturbine zur Schieflast des Kessels. Auch die Entnahme von höherwertigem Dampf für die Kohlendioxid-Abscheidevorrichtung muss ausgeschlossen werden, da dies zu unvertretbarem Energieverlusten führt.

Aufgabe der Erfindung ist es daher, ein kostengünstiges Verfahren zur Nachrüstung einer Kohlendioxid-Abscheidevorrichtung anzugeben, durch welches ein Austausch der Niederdruckstufe der Dampfturbine vermieden wird, und die Entnahme von Niederdruckdampf aus der Überströmleitung ermöglicht, ohne dass dies zu einem Druckabfall in der Niederdruckstufe führt.

Gelöst wird die Aufgabe der Erfindung durch die Merkmale des Anspruchs 1.

Die Erfindung geht von einer fossil befeuerten Kraftwerksanlage aus, die eine Dampfturbine hat, deren Mittel- und Niederdruckstufe getrennte Gehäuse aufweisen. Die bestehende fossil befeuerte Kraftwerksanlage soll dabei mit einer Kohlendioxid-Abscheidevorrichtung nachgerüstet werden.

Erfindungsgemäß sind dazu drei Schritte angegeben. Im ersten Schritt wird die Schluckfähigkeit der Dampfturbine an den für den Betrieb der Kohlendioxid-Abscheidevorrichtung zu entnehmenden Prozessdampf angepasst. Dabei werden entweder der Dampfturbinenpfad durch Austausch von Komponenten angepasst oder Teile der Niederdruckstufe ersetzt. Die Wahl der Optionen wird durch die vorhandene Dampfturbine und die zu entnehmenden Dampfmassenströme bestimmt. Im zweiten Schritt wird die Kohlendioxid-Abscheidevorrichtung über eine Dampfleitung an der Überströmleitung angeschlossen. Im Falle eines Abschaltens der Kohlendioxid-Abscheidevorrichtung wird der Niederdruckdampf weiterhin aus der Überströmleitung entnommen und über einen Bypass in einen bestehenden Kondensator geleitet und kondensiert. Dies ist nötig, da die umgerüstete Dampfturbine nicht mehr mit der vollen Dampfmenge beaufschlagt werden kann. Die Installation einer Bypassleitung ist als dritter Schritt Bestandteil des Verfahrens.

In einer vorteilhaften Weiterentwicklung wird die Kohlendioxid-Abscheidevorrichtung über eine Kondensatrückspeiseleitung mit dem Kondensator der Dampfturbine verbunden. Die Kondensatrückspeiseleitung erlaubt die Rückführung des in dem Desorptionsprozess verbrauchten Prozessdampfes in den Speisewasserkreislauf der Kraftwerksanlage.

In einer vorteilhaften Ausgestaltung ist die fossil befeuerte Kraftwerksanlage eine Gas- und Dampfturbinenkraftwerksanlage, wobei der Dampferzeuger ein Abhitzedampferzeuger ist. Alternativ ist die fossil befeuerte Kraftwerksanlage eine Dampfturbinenkraftwerksanlage, wobei der Dampferzeuger ein befeuerter Kessel ist.

Die Anpassung der Schluckfähigkeit der Niederdruckstufe der Dampfturbine erlaubt es den Wasserdampfkreislauf auf die Prozessdampfentnahme für die Kohlendioxid-Abscheidevorrichtung zu optimieren. Gleichzeitig wird durch den Einsatz einer Bypass-Leitung sichergestellt, dass die Kraftwerksanlage im Falle eines Ausfalls der Kohlendioxid-Abscheidevorrichtung weiter betrieben werden kann, bzw. gesichert angefahren werden kann. Kompromisslösungen für die Auslegung vor und nach der Umrüstung sind nicht mehr nötig.

Nachfolgend wird die Erfindung anhand von Zeichnungen näher erläutert: Darin zeigt
- FIG 1: Fossil befeuerte Kraftwerksanlage ohne Kohlendioxid-Abscheidevorrichtung
- FIG 2: Fossil befeuerte Kraftwerksanlage, die durch das erfindungsgemäße Verfahren mit einer Kohlendioxid-Abscheidevorrichtung nachgerüstet wurde

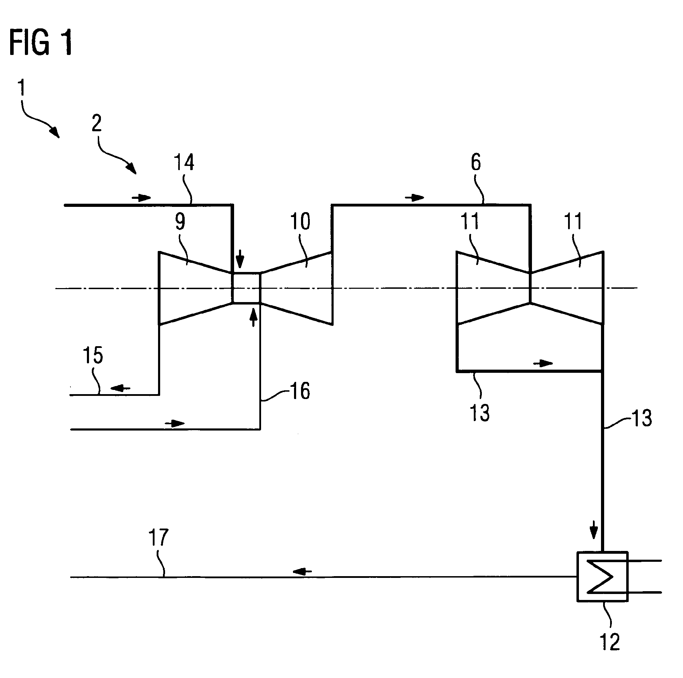

FIG 1 zeigt einen Ausschnitt einer fossil befeuerte Kraftwerksanlage 1. Dargestellt ist die mehrgehäusige Dampfturbine 2, die im Wesentlichen aus einer Hochdruckstufe 9, einer Mitteldruckstufe 10 und in einem davon getrennten Gehäuse angeordneten Niederdruckstufe 11 besteht. In der hier dargestellten Variante ist die Niederdruckstufe 11 doppelflutig ausgestaltet. Außerdem ist der Kondensator 12 gezeigt, der über eine Sattdampfleitung 13 mit der Niederdruckstufe 11 verbunden ist. Nicht näher dargestellt ist hier der Dampferzeuger, der bei einer Gas- und Dampfturbinenanlage ein Abhitzedampferzeuger ist, und bei einer Dampfkraftanlage ein befeuerter Boiler ist.

Der Hochdruckstufe 9 ist zuführend mit einer Frischdampfleitung 14 verbunden. Zur Ausleitung eines teilentspannten Dampfes ist an die Hochdruckstufe 9 einer kalten Zwischenüberhitzungsleizung 15 angeschlossen, welche die Hochdruckstufe 9 mit einem hier nicht näher dargestellten Dampferzeuger verbindet. Die Mitteldruckstufe 10 ist zuführend mit einer heißen Zwischenüberhitzungsleitung 16 verbunden, über die der Mitteldruckstufe ein wieder erhitzter Dampf zuführbar ist. Zur Ausleitung eines teilentspannten Dampfes ist die Mitteldruckstufe 10 über eine Überströmleitung 6 mit der Niederdruckstufe 11 verbunden. Ausleitend ist die Niederdruckstufe 14 über die Sattdampfleitung 13 mit dem Kondensator 12 verbunden. Über eine Speisewasserleitung 17, die an den Kondensator 12 angeschlossen ist, ist der kondensierte Dampf wieder in den Dampferzeuger rückführbar.

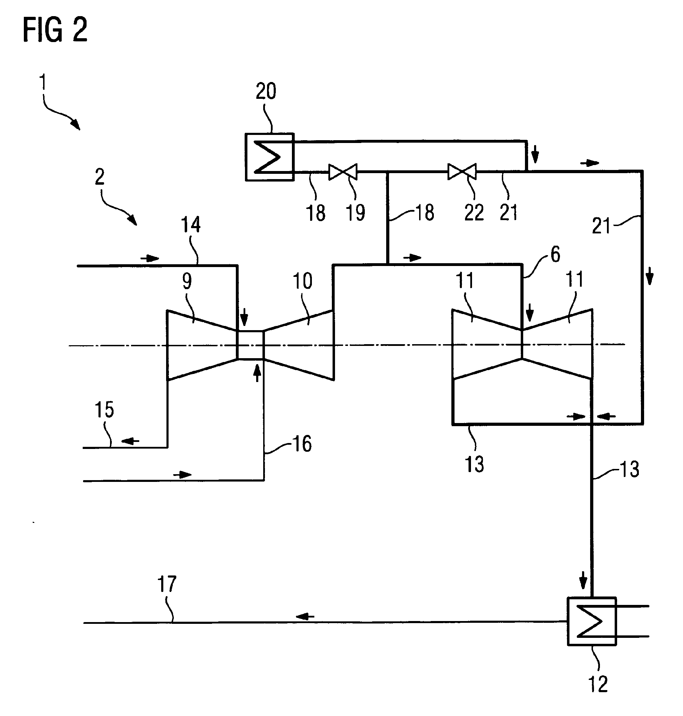

FIG 2 zeigt, ausgehend von der in FIG 1 gezeigten Anordnung, einen Ausschnitt einer fossil befeuerte Kraftwerksanlage 1, die mit einer Kohlendioxid-Abscheidevorrichtung nach dem erfindungsgemäßen Verfahren nachgerüstet wurde. Die Kohlendioxid-Abscheidevorrichtung ist hier nur in Form eines Wärmetauschers 20 dargestellt.

An die Überströmleitung 6 ist eine Prozessdampfleitung 18 für die Entnahme eines Niederdruckdampfes angeschlossen. Die Niederdruckstufe 11 der Dampfturbine 2 ist zudem an die geringeren Dampfmengen angepasst. In die Prozessdampfleitung 18 ist ein erstes Ventil 19 geschaltet. Die Prozessdampfleitung 18 verbindet die Überströmleitung 6 mit dem Wärmetauscher 20, der Bestandteil eines Desorbers der nachgerüsteten Kohlendioxid-Abscheidevorrichtung ist. Über die Prozessdampfleitung 18 ist dem Dampfturbinenprozess nun Niederdruckdampf für den Wärmetauscher 20 entnehmbar. Dazu ist das erste Ventil 19 geöffnet.

Für den Fall, dass die Kohlendioxid-Abscheidevorrichtung 3 nicht in Betrieb ist, oder abgeschaltet werden muss, wird das erste Ventil 19 geschlossen. Der durch die Prozessdampfleitung 18 zur Verfügung stehende Niederdruckdampf wird nun in den Kondensator 12 geleitet. Dazu ist eine Bypassleitung 21 vorgesehen, die die Prozessdampfleitung 18 mit der Sattdampfleitung 13 verbindet. Ein in die Bypassleitung 21 geschaltetes zweites Ventil 22 wird dazu geöffnet. Alternativ kann die Bypassleitung 21 zur Ausleitung des Niederdruckdampfes auch direkt mit dem Kondensator 12 verbunden sein.

## Patentansprüche

1. Verfahren zum Nachrüsten einer eine mehrgehäusige Dampfturbine (2) und einen Kondensator (12) umfassenden fossil befeuerten Kraftwerksanlage (1) mit einer Kohlendioxid-Abscheidevorrichtung (3), bei dem
a) die Schluckfähigkeit der Dampfturbine (2) an den für den Betrieb der Kohlendioxid-Abscheidevorrichtung (3) zu entnehmenden Prozessdampf (4) angepasst wird, **gekennzeichnet dadurch, dass**
b) die Kohlendioxid-Abscheidevorrichtung (3) über eine Prozessdampfleitung (18) an einer zwei Dampfturbinengehäuse verbindenden Überströmleitung (6) angeschlossen wird, und
c) die Prozessdampfleitung (18) mit dem Kondensator (12) durch eine Bypassleitung (21) verbunden wird.

2. Verfahren nach Anspruch 1, bei dem die Kohlendioxid-Abscheidevorrichtung (3) über eine Kondensatrückspeiseleitung (7) mit einem Kondensator (8) der Dampfturbine (2) verbunden wird.

3. Verfahren nach einem der Ansprüche 1 bis 2, bei dem die fossil befeuerte Kraftwerksanlage (1) eine Gas- und Dampfturbinenkraftwerksanlage ist, wobei der Dampferzeuger ein Abhitzedampferzeuger ist.

4. Verfahren nach einem der Ansprüche 1 bis 2, bei dem die fossil befeuerte Kraftwerksanlage eine Dampfturbinenkraftwerksanlage ist, wobei der Dampferzeuger ein befeuerter Kessel ist.

5. Fossil befeuerte Kraftwerksanlage (1), die gemäß dem Verfahren nach einem der Ansprüche 1 bis 2 nachgerüstet ist.

## Claims

1. Method for retrofitting a fossil-fuelled power station (1) including a multi-casing steam turbine (2) and a condenser (12) with a carbon dioxide separation device (3), in which
a) the maximum flow rate of the steam turbine (2) is adjusted to the process steam (4) to be removed for operation of the carbon dioxide separation device (3), **characterised in that**
b) the carbon dioxide separation device (3) is connected to an overflow line (6) connecting two steam turbine housings by way of a process steam line (18), and
c) the process steam line (18) is connected to the condenser (12) via a bypass line (21).

2. Method according to claim 1, in which the carbon dioxide separation device (3) is connected to a condenser (8) of the steam turbine (2) by way of a condensate regeneration line (7).

3. Method according to one of claims 1 to 2, in which the fossil-fuelled power station (1) is a gas and steam turbine power station, wherein the steam generator is a heat-recovery steam generator.

4. Method according to one of claims 1 to 2, in which the fossil-fuelled power station is a steam turbine power station, wherein the steam generator is a fired boiler.

5. Fossil-fuelled power station (1), which is retrofitted in accordance with the method according to one of claims 1 to 2.

## Revendications

1. Procédé de rééquipement d'une centrale (1) électrique à combustible fossile, comprenant une turbine (2) à vapeur à plusieurs carters et un condenseur (12), ayant un dispositif (3) de séparation du dioxyde de carbone, dans lequel
a) on adapte le débit de dimensionnement de la turbine (2) à vapeur à la vapeur (4) de processus à retirer pour le fonctionnement du dispositif (3) de séparation du dioxyde de carbone, **caractérisé en ce que**
b) le dispositif (3) de séparation du dioxyde de carbone communique par un conduit (18) de vapeur de processus avec un conduit (6) de trop-plein faisant communiquer deux carters de turbine à vapeur, et
c) le conduit (18) pour de la vapeur de processus communique avec le condenseur (62) par un conduit (21) de dérivation.

2. Procédé suivant la revendication 1, dans lequel le dispositif (3) de séparation du dioxyde de carbone communique avec le condenseur de la turbine (2) à vapeur par un conduit (7) de retour de produit condensé.

3. Procédé suivant l'une des revendications 1 à 2, dans lequel la centrale (1) à combustible fossile est une centrale à turbine à gaz et à turbine à vapeur, le générateur de vapeur étant un générateur de vapeur à récupération de la chaleur perdue.

4. Procédé suivant l'une des revendications 1 à 2, dans lequel la centrale à combustible fossile est une centrale à turbine à vapeur, le générateur de vapeur étant une chaudière à foyer.

5. Centrale (1) électrique à combustible fossile, qui est rééquipée par le procédé suivant l'une des revendications 1 à 2.
